# EUROPEAN PATENT APPLICATION

(11) **EP 1 213 487 A1**
(43) Date of publication of application: **12.06.2002**
(21) Application number: 01310184.5
(22) Date of filing: 05.12.2001
(51) Int. Cl.: F15B 11/20, B65G 47/82, F15B 15/14, C03B 9/453

(54) **Fluid actuated piston with a supply conduit**

(30) Priority: 09.12.2000 GB 0030081
(71) Applicant: Sheppee International Limited, Elvington, York YO41 4AU (GB)
(72) Inventor: Sedgwick, Trevor, South Yorkshire, S75 1JQ (GB); Seymour, Elliott, Doncaster, DN9 3HU (GB)
(74) Representative: Allen, Philippa Margaret

(57) **Abstract**

A piston for a pusher apparatus and a pusher apparatus incorporating such a piston, are described. The pusher apparatus consists of one or more pusher plates (14) for transferring one or more containers from a dead plate of a glass forming machine or the like to a conveyor, said plates having an associated pressurised fluid supply means to assist in retention of transferred containers in position. The piston has a piston member (2), slidable from a first undeployed to a second deployed position under action of an actuating fluid, a fluid supply conduit (4) to supply fluid to a distal end of the piston, and a means (8,10) associated with the piston to prevent supply of actuating fluid to the fluid supply conduit when undeployed, and to divert at least some actuating fluid to the supply conduit once said piston is deployed to a predetermined extent.

## Description

The invention relates to a fluid actuated piston with a built in fluid delivery system. In particular, the invention relates to a pneumatic piston, such as a pneumatic plunger or pusher device, for example for operation with a conveyor belt line, which has a built in air supply system.

Plunger or pusher devices adapted for remote manipulation of objects have wide applicability in a range of industries. Such devices may be controlled and operated by any suitable mechanism, for example electrical, mechanical, electro-mechanical, pneumatic, hydraulic etc.

In a number of circumstances it may also be desirable to provide a fluid supply to the forward end of the piston, to be operated in conjunction therewith for a variety of reasons. These reasons might include, in addition to cooling and other material treatment, conferring a degree of assistance with the manipulation effect of the plunger (for example by offering finer scale control and/or a cushioning effect etc).

Such a concept is known, for example in the field of glass forming, and in particular in relation to pusher mechanisms which transfer glass containers from a dead plate of an individual section machine to a moving conveyor. Conventionally in such systems, a multi-container pusher includes a typically pneumatic cylinder extending to a container handling arm having a number of L-shaped pockets to receive the containers on the dead plate and push them towards a conveyor. In use, formed containers are deposited in these pockets and air under pressure is directed towards the containers to retain them in position during operation of the pusher.

An example of such a device is shown in UK patent 2 292 551, where air is directed through a manifold within the handling arm describing the L-shaped pockets, via passages in the extending fingers defining the L-shaped pockets, and then rearwardly to retain the bottles in position.

It is an object of the present invention to provide a fluid actuated piston which incorporates a fluid supply means in a simple and effective manner.

Thus according to the present invention in its broadest concept a fluid actuated piston comprises a piston member, slideable from a first undeployed to a second deployed position under action of an actuating fluid, a fluid supply conduit to supply fluid to a distal end of the piston, and a means associated with the piston to prevent supply of actuating fluid to the fluid supply conduit when undeployed, and to divert at least some actuating fluid to said supply conduit once said piston is deployed to a predetermined extent.

In particular, the piston member is at least partly hollow, describing a cavity which constitutes and/or constitutes part of and/or contains the said fluid supply conduit. For example a fluid actuated piston comprises a hollow piston member describing a longitudinal cavity therein; a hollow fluid supply conduit located within said cavity, and mounted such that the piston is slideable relative thereto; a fluid proof seal between an inner surface of said longitudinal cavity and an outer surface of said fluid supply conduit therein, located generally towards the proximal end of the piston and slideable therewith; at least one aperture in a wall of the fluid supply conduit located distally of the fluid proof seal.

The invention derives from the surprising realisation that for a great many purposes, the same fluid which it is desirable to supply to the distal end of the pusher apparatus can also be used as the pneumatic or hydraulic fluid driving the pusher apparatus. This allows great simplification of supply design in accordance with the present invention.

In the present invention in its retracted state fluid cannot pass through the supply conduit. For example in the preferred embodiment, the at least one aperture in a wall of the fluid supply conduit lies distally of the fluid seal. On actuation, driving fluid bears on an active fluid surface at a proximal end of the cylinder in the usual manner. In the embodiment, fluid passes into the longitudinal cavity within the hollow piston member, but only so far as the fluid seal.

The piston member, including associated fluid seal, is propelled slideably relative to the fluid supply member in the usual manner. As the piston member is deployed, a predetermined point is reached at which a mechanism diverts at least some fluid into the conduit for transmission and onward supply to the distal end of the piston member. The mechanism is configured to operate automatically, for example comprising mutually co-operating opening and/or closure means defining first and second fluid paths and switching from the first fluid path whereby no fluid is transmittable to the distal end of the conduit to the second fluid path whereby at least some fluid is diverted to flow to the distal end of the conduit at the predetermined point, rather being externally actuated.

In the preferred embodiment, this is achieved in that the fluid proof seal eventually passes distally beyond the at least one aperture in the wall of the fluid supply conduit. As a result, fluid within the longitudinal cavity of the piston member is able to pass into the fluid supply conduit for onward delivery at the distal end of the piston.

The piston arrangement offers a very simple system for fluid supply to the end of the piston member, obviating the need for a separate fluid supply means of any sort. By means of the simple mechanical arrangement, the system automatically switches fluid from a driving role to a supply roll once the piston has progressed to the predetermined point, e.g. once the fluid seal has passed beyond the aperture or apertures within the conduit. Control is automatic, without the need for additional electronic or other control of the fluid supply system.

In the preferred embodiment, a hollow piston member describes a longitudinal cavity which, at least in the area proximal of the fluid seal, is of greater cross sectional area than the external cross sectional area of the hollow fluid supply conduit located therein, to provide a degree of fluid space therebetween. The fluid seal may comprise an area in which the internal cross section of the longitudinal cavity of the hollow piston member is reduced to effect a snug, fluid proof fit between the internal wall thereof and the external wall of the hollow fluid supply conduit. Alternatively, a sealing member may be provided within the longitudinal cavity to snugly engage both the internal surface of the cavity and the external surface of the hollow fluid supply conduit to effect sealing.

In each case, the sealing means preferably incorporates or comprises flexibly resilient sealing material to effect a fluid-tight seal. Suitable materials will include flexibly resilient polymeric materials, including natural and artificial rubber and the like.

The sealing material is preferably so configured that the action of the driving fluid bearing down upon the seal is such as to tend to urge the seal into more intimate contact with the internal surface of the longitudinal cavity and/or external surface of the fluid supply conduit.

In a particularly preferred embodiment, the hollow piston member comprises a generally cylindrical piston open at either end, and with an internal surface describing a longitudinal cavity therein of generally circular cross section. Preferably, the fluid supply conduit is similarly generally cylindrical and preferably located coaxially therein.

For convenience of fabrication, the longitudinal cavity in the hollow piston member is conveniently of generally constant cross sectional profile, and a transversely extending sealing member is provided fixedly mounted to the internal surface of the longitudinal cavity and extending to contact with the external surface of the fluid supply conduit. The sealing member must effect a fluid-tight fit with the fluid supply conduit in use, whilst not unduly increasing the resistance to the slideable relative motion of the piston and the fluid supply conduit. Accordingly, the sealing member preferably incorporates, at least in the region which contact the fluid supply conduit, flexibly resilient sealing material as above described.

Preferably, the piston mechanism further comprises fluid supply means adapted to supply driving fluid to an active surface of the piston member at a proximal end thereof.

The piston apparatus may be adapted to operate with any fluid suitable for a dual driving and supply purpose as envisaged by the invention. Pneumatic systems, and in particular those which use atmospheric air, preferably at greater than atmospheric pressure, are particularly preferred since they particularly exploit the simplicity conferred by the invention. However, where reference herein is made to compressed air by way of example, it will be understood that other fluid systems, and in particular pneumatic systems, could be applicable.

Preferably, the piston apparatus comprises further means to retract the piston member. The retraction means are not specifically critical to the present invention, so that although in many cases for simplicity retraction means will employ the existing hydraulic or pneumatic system as the case may be, the piston may also be retracted by use of alternative hydraulic or pneumatic systems, electrical, mechanical or electro-mechanical systems etc.

The piston apparatus in accordance with the invention is designed to form part of a pusher apparatus for remote manipulation of objects. To that end, object handlers are preferably provided in association with a distal end of the piston member and/or mounting means are therefore provided for mounting of appropriate object handling means. Means are similarly provided in association with a distal end of the piston for connection of the fluid conduit to a fluid delivery system associated with the object handling means.

In a particularly preferred embodiment, the distal end of the piston is provided with a mounting plate incorporating a manifold in fluid communication with the fluid supply conduit, and apertures in fluid communication with the manifold adapted for onward transmission of the fluid to a fluid delivery system, and further comprises mounting means for attachment of an object manipulation device or devices.

A pusher apparatus in accordance with the invention may comprise a single piston and supply conduit arrangement as above described, or may comprise a plurality of such cylinder and conduit arrangements. Where a plurality of cylinder and conduit arrangements are used, the pusher apparatus is for simplicity preferably adapted to receive a single actuating fluid supply, and to distribute the same to an active fluid surface of each of said piston members. Additionally or alternatively, the piston members may be mechanically linked to ensure that they are actuated together.

In a particularly preferred embodiment of the invention, the pusher mechanism is adapted for engagement with a pusher plate for transferring one or more containers from a dead plate of a glass forming machine or the like to a conveyor. In particular, the pusher mechanism is adapted for engagement with a pusher plate for transferring a plurality of such containers, which pusher plate comprises a generally planar side member, a number of fingers extending transversely therefrom and defining therewith a corresponding number of container receiving pockets, and a pressurised fluid supply means configured to receive fluid from the fluid supply conduit and to direct fluid under pressure against a container located within the pocket such as to assist in retention of a container therein.

The invention in a further aspect comprises a kit of parts consisting of a pusher mechanism as hereinbefore described, and at least one pusher plate as hereinbefore described adapted to be engaged mechanically and fluidly therewith. Preferably, a plurality of such plates is provided interchangeably engageable with the pusher to deal with a plurality of bottle sizes and shapes. Preferably, the pusher mechanism includes a mounting plate having means to releasably engage with such pusher plates, and defining a fluid supply manifold in fluid communication with the fluid supply conduit and provided with onward fluid supply apertures adapted for connection with the fluid supply means of the pusher plate.

The invention in a further aspect comprises a pusher mechanism for transferring a selected number of containers from a dead plate of a glass forming machine or the like to a conveyor said mechanism comprising a pusher mechanism as hereinbefore described, optionally a pusher plate mounting plate, and a pusher plate for transferring a selected number and in particular a plurality of such containers, which pusher plate comprises a generally planar side member, a number of fingers extending transversely therefrom and defining therewith a corresponding number of container receiving pockets, and a pressurised fluid supply means configured to receive fluid from the fluid supply conduit and to direct fluid under pressure against a container located within the pocket such as to assist in retention of a container therein.

The fluid supply means provided with the pusher plate may comprise an arrangement of fluid supply conduits and apertures attached to or associated with the pusher plate, or may comprise an arrangement of fluid supply apertures integral to the pusher plate and in communication directly with the fluid supply conduit or with a fluid supply manifold in the pusher plate and/or a mounting plate, for example as described in UK patent 2 292 551.

For example, each of the fingers of the pusher plate may include a pressurized fluid discharge passage communicating with the surface of the finger aimed to direct fluid under pressure against a container located within its pocket with the side member further including a manifold to provide fluid communication between the fluid supply conduit and each of the fingers to their respective fluid discharge passages. Additionally or alternatively, the side member of the pusher plate may include a pressurized fluid discharge manifold in fluid communication with the fluid supply conduit and provided with discharge passages communicating with the surface thereof at a location thereon in each pocket defined by the fingers, each passage aimed to direct fluid under pressure against a container located within its pocket. In each case, the fluid under pressure is directed relatively to container such as to encourage retention of the container within the respective pocket in a manner which will be familiar to the skilled person. A single discharge point producing a single pressurized jet or a plurality of suitably orientated discharge points may be associated with each pocket to effect this.

The invention will now be described by way of example only with reference to Figures 1 to 3 of the accompanying drawings, in which

Figure 1 is a longitudinal partial cross section of a single piston unit in accordance with the invention in a retracted configuration;

Figure 2 is the partial cross section of Figure 1 illustrating the single piston arrangement in a deployed configuration;

Figure 3 is a perspective view of a bottle pusher arrangement in accordance with a preferred embodiment of the invention.

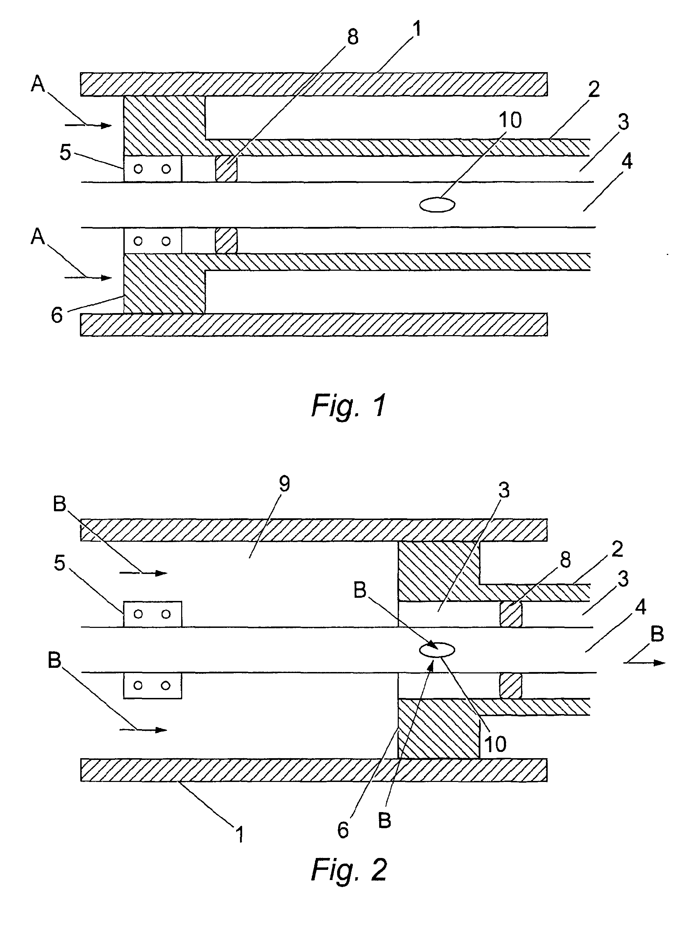

Referring first to Figures 1 and 2, a piston arrangement is shown within a housing (1).

A cylindrical piston member (2) is provided with a hollow cavity (3) in which is mounted coaxially a cylindrical air supply tube (4) retained in position relative to the mounting (1) by mounting means (5).

In the initial, underplayed configuration represented in Figure 1, air under pressure from a conventional factory air supply is directed in the direction of the arrows (a) and an active fluid surface (6) at the rear of the piston member (2).

As the piston (2) slides relative to the conduit (4), air passes into the rear end of the cavity (3) but is prevented from passing through the cavity by rubber O-ring seal (8) which is fixedly mounted on the internal diameter of the piston (2) so as to slide relative to but fit snugly with the air tube (4) and form a gas tight seal therearound.

As the piston is deployed further, to the configuration shown in Figure 2, an important change is effected. The O-ring seal (8), fixedly mounted inside the cavity (3) and the piston (2), slides beyond the aperture (10) provided in the wall of the tube (4). As a result, the path available to the air which has hitherto been pneumatically driving the piston is altered. Air passes in the direction of the arrows (B) via the chamber (9) in the housing into the hollow interior (3) at the rear of the piston (2) and hence through the aperture (10) into the hollow tubular conduit (4). Air is thus delivered via the tubular conduit (4) to the front end of the piston arrangement.

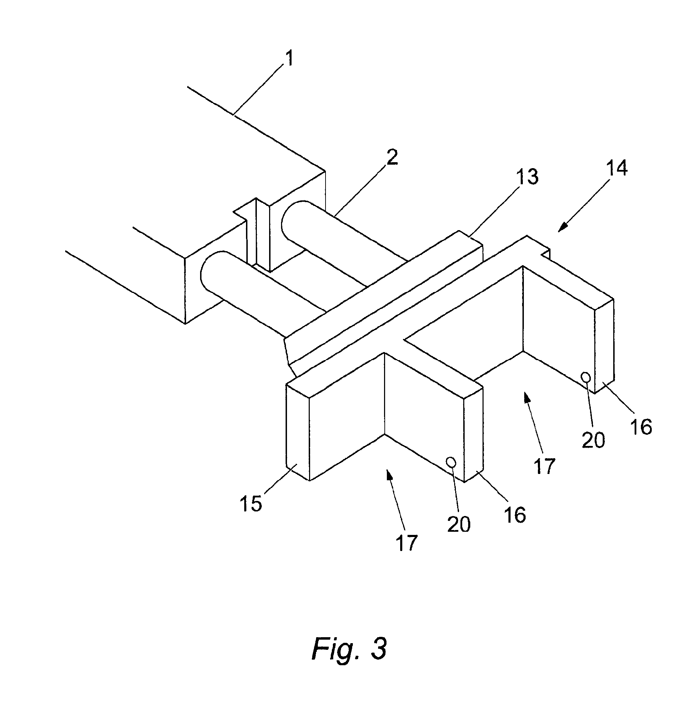

Air or any other fluid may be delivered using this arrangement to the front end of the piston pusher for a variety of purposes. In a preferred embodiment, the invention is envisaged for use to provide both the pneumatic drilling force and the controlling air supply to a bottle pusher mechanism for use in transferring manufactured glass containers from a dead plate to a moving conveyor. An example of the embodiment of the invention suitable for this purpose is illustrated in Figure 3.

A housing (1) is provided with a pair of pistons (2) which are shown deployed. For the pistons is provided a mounting plate (13).

The mounting plate (13) is provided with means to releasably engage a bottle pusher plate (14) which is in the usual form comprising a side portion (15) and a plurality (in this case 2) perpendicularly extending finger portions (16) which define two L-shaped pockets (17).

The pusher plate (14) is used to push fabricated glass containers from a dead plate to a transversally moving conveyor in the usual manner. Each container is initially located in a pocket (17) and the pusher mechanism is actuated to cause the pistons (2) to be deployed to push the bottles towards the conveyor. The number of pockets (17) and hence the number of fingers (16) will depend on the overall fabrication process in question. In the example, a double pocket is shown, but pushers of one, two, three, four or more pockets will be known to the person skilled in the art. The pusher of the invention can be made compatible with a full range of differently sized pusher plates with different numbers of pockets which can be releasably engaged on the system as required.

In addition to providing a means for mounting the pusher plate (14) the backing plate also constitutes a hollow air manifold which receives air from the supply tube (4) associated with each cylinder (2) for onward transmission to the pusher plate. Air under pressure may therefore be supplied in conventional manner to assist in retention of bottles within the pockets (17) in use.

In the embodiment shown, air is supplied through apertures (20) in the fingers (16) which are in fluid communication with the manifold in the mounting plate (13) via similar manifolds within the pushing plate (14) in like manner to that described in UK patent 2 292 551. Air is thus directed rearwardly to keep containers in position in the pockets. However, the invention is easily applicable to alternative arrangements. For example, apertures may instead be provided in the surfaces of the side portion (15) of the pushing plate (14) which are in fluid communication with the manifold in the mounting plate (13), and air directed forwardly to keep containers in position in the pockets.. Additionally or alternatively separate air supply conduits could be provided, such as in the form of pneumatic lines, oriented to direct air in either such direction, and in fluid communication with a manifold within the backing plate (13), or directly connected to the fluid supply conduit.

Other adaptations of the system, in particular in relation to the pusher plate, will readily suggest themselves to the skilled person by an analogy with the conventional pusher plates. For example, the bottle receiving surfaces of the pusher plate around the pocket (17) may be provided with a layer of surface padding and/or insulation material (not shown) to minimise container damage and/or heat transfer from hot bottles to the pusher system.

## Claims

1. A fluid actuated piston comprising a piston member, slideable from a first undeployed to a second deployed position under action of an actuating fluid, a fluid supply conduit to supply fluid to a distal end of the piston, and a means associated with the piston to prevent supply of actuating fluid to the fluid supply conduit when undeployed, and to divert at least some actuating fluid to said supply conduit once said piston is deployed to a predetermined extent.

2. A fluid actuated piston in accordance with claim 1 wherein the piston member is at least partly hollow, describing a cavity which constitutes and/or constitutes part of and/or contains the said fluid supply conduit.

3. A fluid actuated piston in accordance with any preceding claim comprising a fluid diversion mechanism configured such that as the piston member is deployed, there exists a predetermined point at which a mechanism diverts at least some fluid into the conduit for transmission and onward supply to the distal end of the piston member.

4. A fluid actuated piston in accordance with claim 3 wherein the mechanism comprises mutually co-operating opening and/or closure means defining first and second fluid paths and switching from the first fluid path whereby no fluid is transmittable to the distal end of the conduit to the second fluid path whereby at least some fluid is diverted to flow to the distal end of the conduit at the predetermined point.

5. A fluid actuated piston in accordance with any preceding claim comprising a hollow piston member describing a longitudinal cavity therein; a hollow air supply conduit located within said cavity, and mounted such that the piston is slideable relative thereto; a fluid proof seal between an inner surface of said longitudinal cavity and an outer surface of said fluid supply conduit therein, located generally towards the proximal end of the piston and slideable therewith; at least one aperture in a wall of the fluid supply conduit located distally of the fluid proof seal.

6. A fluid actuated piston in accordance with claim 5 wherein the hollow piston member describes a longitudinal cavity which, at least in the area proximal of the fluid seal, is of greater cross sectional area than the external cross sectional area of the hollow fluid supply conduit located therein, to provide a degree of fluid space therebetween.

7. A fluid actuated piston in accordance with claim 6 wherein a sealing means is provided within the longitudinal cavity to snugly engage both the internal surface of the cavity and the external surface of the hollow fluid supply conduit to effect a snug, fluid proof fit between the internal wall thereof and the external wall of the hollow fluid supply conduit.

8. A fluid actuated piston in accordance with claim 7 wherein the sealing means incorporates or comprises flexibly resilient sealing material so configured that the action of the driving fluid bearing down upon the seal is such as to tend to urge the seal into more intimate contact with the internal surface of the longitudinal cavity and/or external surface of the fluid supply conduit.

9. A fluid actuated piston in accordance with any preceding claim wherein the hollow piston member comprises a generally cylindrical piston open at either end, and with an internal surface describing a longitudinal cavity therein of generally circular cross section and wherein the fluid supply conduit is similarly generally cylindrical and located coaxially therein.

10. A pusher apparatus for use in conjunction with one or more object handlers for remote manipulation of objects comprising at least one fluid actuated piston in accordance with any preceding claim and further comprising mounting means in association with a distal end of the piston member for the mounting of one or more object handlers.

11. A pusher apparatus in accordance with claim 10 wherein the mounting means comprises a mounting plate at the distal end of the piston is incorporating a manifold in fluid communication with the fluid supply conduit, and apertures in fluid communication with the manifold adapted for onward transmission of the fluid to a fluid delivery system associated with the object handler(s), and further comprising mounting means for attachment of one or more object handlers.

12. A pusher apparatus in accordance with claim 10 or claim 11 further comprising one or more object handlers in the form of a pusher plate for transferring one or more containers from a dead plate of a glass forming machine or the like to a conveyor, which pusher plate comprises a generally planar side member, a number of fingers extending transversely therefrom and defining therewith a corresponding number of container receiving pockets, and having an associated pressurised fluid supply means configured to receive fluid from the fluid supply conduit and to direct fluid under pressure against a container located within the pocket such as to assist in retention of a container therein.

13. A pusher apparatus in accordance with claim 12 wherein the fingers of the pusher plate include fluid discharge passage communicating with the surface of the finger aimed to direct fluid under pressure against a container located within its pocket with the side member further including a manifold to provide fluid communication between the fluid supply conduit and each of the fingers to their respective fluid discharge passages.

14. A pusher apparatus in accordance with claim 12 or 13 wherein the side member of the pusher plate may include a pressurized fluid discharge manifold in fluid communication with the fluid supply conduit and provided with discharge passages communicating with the surface thereof at a location thereon in each pocket defined by the fingers, each passage aimed to direct fluid under pressure against a container located within its pocket.

15. A fluid actuated piston or pusher apparatus in accordance with any preceding claim further comprising actuating fluid supply means.

16. A fluid actuated piston or pusher apparatus in accordance with any preceding claim wherein the actuating fluid is compressed air.
